# EUROPÄISCHE PATENTANMELDUNG

(11) **EP 1 563 946 A2**
(43) Veröffentlichungstag der Anmeldung: **17.08.2005**
(21) Anmeldenummer: 05002431.4
(22) Anmeldetag: 04.02.2005
(51) Int. Cl.: B23Q 1/58, B23Q 5/32, B23Q 11/08, B23Q 1/01

(54) **Werkzeugmaschine mit einem Führungsschlitten tragenden Spindelstock**

(30) Priorität: 13.02.2004 DE 102004007472
(71) Anmelder: Grob-Werke Burkhart Grob e.K., 87719 Mindelheim (DE)
(72) Erfinder: Lutz, Heinrich, 87742 Dirlewang (DE)
(74) Vertreter: Pfister, Stefan, Dipl.-Phys.

(57) **Zusammenfassung**

Die Erfindung betrifft eine Werkzeugmaschine mit wenigstens einem Spindelstock (1) für eine oder mehrere Werkzeugspindel/n mit einem Spindelkopf (3), wobei der Spindelstock in Spindelachsrichtung verfahrbar ist, wobei der Bearbeitungsraum der Werkzeugmaschine durch eine wand (4) begrenzt ist, der Spindelstock durch eine Öffnung in dem Bearbeitungsraum hineinreicht und die Werkzeugspindel an ihrem vorderen Ende ein in den Bearbeitungsraum hineinragendes Werkzeug trägt.

Die Erfindung zeichnet sich dadurch aus, daß mindestens ein auf mindestens einer Führungsschiene (5) bewegbarer Führungsschlitten (6) für den Spindelstock vorgesehen ist und der Spindelstock den Führungsschlitten trägt.

## Beschreibung

Die Erfindung betrifft eine Werkzeugmaschine mit wenigstens einem Spindelstock für eine oder mehrere Werkzeugspindel/n mit einem Spindelkopf, wobei der Spindelstock in Spindelachsrichtung verfahrbar ist und der Bearbeitungsraum der Werkzeugmaschine durch eine Wand begrenzt ist, der Spindelstock durch eine Öffnung in den Bearbeitungsraum hineinreicht und die Werkzeugspindel an ihrem vorderen Ende ein in den Bearbeitungsraum hineinragendes Werkzeug trägt.

Derartige Werkzeugmaschinen sind bekannt. Es ist dabei üblich, eine oder mehrere Werkzeugspindeln in Spindelstöcken bzw. in sogenannten Pinolen in Spindelachsrichtung verfahrbar auszugestalten.

Aus dem Stand der Technik ist beispielsweise eine werkzeugmaschine und ein Verfahren zur Justage einer Spindelposition dieser Werkzeugmaschine bekannt. In diesem Lösungsvorschlag wird eine Werkzeugmaschine vorgeschlagen, die wenigstens eine im Raum positionierbare Spindel aufweist. Die Spindeln sind dabei über Stangen auf verschiebbaren Schlitten gelagert. Die Verschiebung der Schlitten bewirkt eine Positionierung der Spindel im Raum. Das heißt, die Spindel selbst ist nicht schienengeführt oder derart gelagert, daß sie auf einer festen Position in den Bearbeitungsraum hineingeführt wird. Vielmehr ist in der erwähnten Lösung eine werkzeugmaschine mit Stabkinematik beschrieben. Derartige Werkzeugmaschinen sind für spezielle Bearbeitungsfälle gedacht und nicht für Bearbeitungen, die mit einer Werkzeugmaschine mit einem Spindelstock der zur Rede stehenden Art realisiert werden können.

Dazu ist es beispielsweise vorgesehen, an einem Pinolenkörper eine Führungsschiene anzuordnen, die sich über die komplette Länge der Pinole erstreckt. Die Anordnung ist dabei derart gebildet, daß eine vertikale Stahlabdeckung vorgesehen ist, durch die die Pinole in den Arbeitsraum hineinragt. Im Stand der Technik ist es dazu auch bekannt, daß die Pinole die Führungsschiene trägt, da dadurch eine gleichbleibende Kontur realisiert werden kann, die gerade für das Abdichten des Arbeitsraumes an dem Durchbruch in dem Bearbeitungsraum von Vorteil ist. Der vordere Teil der Führungsschiene ragt dabei in den Bearbeitungsraum hinein, nämlich dann, wenn der Spindelstock bzw. die Pinole in Spindelrichtung nach vorne verfahren ist. Sind Schlitten für die Pinole vorgesehen, befinden sich diese hinter der Abdeckung, also nicht im Bearbeitungsraum.

Wird nun vom Spindelstock verlangt, daß er einen großen Hub in Richtung der Spindelachse ausführen soll, so entsteht das Problem, daß ein verhältnismäßig langer Bereich des Spindelstockes freikragend ausgebildet ist. Dies ist dadurch begründet, daß der erste Führungsschlitten auf der Führungsschiene entsprechend so weit zurückgesetzt sein muß, damit ein großer Hub in Richtung der Spindelachse überhaupt erst möglich ist. Diese freikragende Ausgestaltung führt aber zu dem Problem, daß der Spindelbereich zu Schwingungen neigt. Dabei ist zu beachten, daß die Arbeitsspindel mit einer erheblichen Geschwindigkeit rotiert und dieser freikragende Spindelbereich eine Eigenfrequenz aufweist, die im Resonanzfall zu einem entsprechenden Aufschaukeln der Schwingungsneigung führt.

Im Ergebnis wäre ein sogenanntes Rattern des Werkzeuges auf dem Werkstück zu beobachten, was in jedem Fall nicht gewünscht ist, denn dadurch kann sowohl das Werkzeug als auch das Werkstück Schaden nehmen.

Es ist daher Aufgabe der Erfindung, eine werkzeugmaschine mit einer Werkzeugspindel, die vorzugsweise in einem Spindelstock angeordnet ist, zur verfügung zu stellen, die zum einen einen großen Hub in Richtung der Spindellängsachse auszuüben vermag und zum anderen ausreichend stabil ist, um ein ungewünschtes Schwingen zu vermeiden.

Zur Lösung dieser Aufgabe geht die Erfindung von dem zuvor beschriebenen Stand der Technik aus und schlägt vor, eine Werkzeugmaschine mit wenigstens einem Spindelstock für eine oder mehrere Werkzeugspindeln mit einem Spindelkopf zur Verfügung zu stellen, wobei der Spindelstock in Spindelachsrichtung verfahrbar ist und wobei der Bearbeitungsraum der Werkzeugmaschine durch eine Wand begrenzt ist, der Spindelstock durch eine Öffnung in den Bearbeitungsraum hineinreicht und die Werkzeugspindel an ihrem vorderen Ende ein in den Bearbeitungsraum hineinragendes Werkzeug trägt, die sich dadurch auszeichnet, daß mindestens ein auf mindestens einer Führungsschiene bewegbarer Führungsschlitten für den Spindelstock vorgesehen ist, und der Spindelstock den Führungsschlitten trägt. Durch die erfindungsgemäße Ausgestaltung der Werkzeugmaschine ist es nunmehr möglich, einen großen Hub in Richtung der Spindellängsachse auszuführen, wobei die Spindel ausreichend stabil ist. Ein ungewünschtes Schwingen wird jetzt vermieden, da der Führungsschlitten den Spindelstock trägt und ausreichend stabilisiert. Damit wird insbesondere das unerwünschte sogenannte Rattern oder eine unerwünschte Unwucht durch das Aufschwingen des Werkzeuges aufgrund der Aufschwingbewegung der Spindel vermieden. Die Spindel selbst ist nicht mehr in dem Maße freikragend ausgebildet wie das nach dem Stand der Technik bei gleicher Hublänge erforderlich ist. Insofern werden die Probleme aus dem Stand der Technik, wie oben beschrieben, auf sehr elegante Weise gelöst, indem nämlich der Schlitten von dem Spindelstock oder aber auch von einer Pinole mit einer Werkzeugspindel getragen wird und damit ausreichende Stabilität erhält. In gleicher weise kann man dann die Führungsschienen mit anderen technischen Mitteln stabilisieren, wie dies nachfolgend noch ausreichend beschrieben werden wird.

Gegenüber der aus dem Stand der Technik bekannten Lösung einer Werkzeugmaschine mit Stabkinematik unterscheidet sich die jetzt erfindungsgemäß vorgeschlagene Lösung dadurch, daß der Spindelstock auf einer Führungsschiene gelagert ist. Er ist damit nicht frei im Raum positionierbar, sondern nur geführt positionierbar. Gegenüber der Werkzeugmaschine mit Spindelstock besitzt die jetzt vorgeschlagene Lösung jedoch den Vorteil, daß innerhalb des Bearbeitungsraumes der Spindelstock wesentlich weiter herausgefahren werden kann. Dies kann insbesondere ohne die sonst aus dem Stand der Technik bekannten, negativen Schwingungen beziehungsweise das sich negativ auswirkende Aufschwingen erfolgen. Bei Werkzeugmaschinen mit Stabkinematik ist die Spindel beziehungsweise der Spindelstock zudem an beziehungsweise auf einer Halteplatte gelagert. Diese ist dann über Stäbe mit dem Gestell beziehungsweise auf dort geführten Schlitten für die Stäbe verbunden. Die Positionierung erfolgt durch das Verschieben der Schlitten, wodurch die Stäbe auf die Halteplatte beziehungsweise auf die Spindel oder den Spindelstock einwirken können. Dies ist eine völlig andere Maschinenkonzeption die, wie bereits erwähnt, eine freie Positionierung im Bearbeitungsraum, zumindest in unterschiedlichen Höhenlagen erlaubt. Dem gegenüber ist die jetzt vorgeschlagene Lösung einfacher aufgebaut und ermöglicht ein weiteres Hereinfahren der Spindel in den Bearbeitungsraum, ohne daß diese ihre Stabilität verliert. Auch die Abdichtung des Bearbeitungsraumes ist bei der jetzt vorgeschlagenen Lösung wesentlich einfacher zu realisieren, als dies bei Lösungen nach dem Stand der Technik und auch bei Lösungen von werkzeugmaschinen mit Stabkinematik der Fall ist. Bei Bearbeitungsmaschinen mit Stabkinematik ist es beispielsweise erforderlich, daß die Abdeckung zum Bearbeitungsraum teleskopartig ausgebildet ist, um die unterschiedliche Positionierung in unterschiedlichen Höhenlagen überhaupt erst zu ermöglichen, ohne daß Verschmutzungen des Antriebsbereiches beziehungsweise der Spindellagerung erfolgen.

Erfindungsgemäß ist es entsprechend einer Weiterbildung der Werkzeugmaschine vorgesehen, daß die Führungsschiene bzw. die Führungsschienen in dem Bearbeitungsraum der Werkzeugmaschine hineinragt bzw. hineinragen. Dadurch wird erreicht, daß die Spindel ausreichend weit in den Bearbeitungsraum hineinfahren kann, wenn dies erforderlich ist. Die Führungsschienen selbst behindern den Bearbeitungsprozess nicht, da sie lediglich soweit in den Bearbeitungsraum hineinragen, wie dies zum einen erforderlich ist und zum anderen die Bewegungsfreiheit des zu bearbeitenden Werkstückes nicht einschränkt. Im übrigen kann das zu bearbeitende Werkstück auch oberhalb der Ebene, in der die Führungsschienen angeordnet sind, positioniert werden, um eine Kollision zu vermeiden. Dies ist technisch auf übliche Weise möglich.

In einer bevorzugten Variante der Erfindung ist vorgesehen, daß zumindest ein Führungsschlitten durch die Öffnung der Wand fährt. Durch die erfindungsgemäße Ausgestaltung ist es möglich, daß nunmehr die Führungsschlitten in den Bearbeitungsraum hineinfahren und es so ermöglichen, daß die Werkzeugspindel in Spindelachsrichtung (Z-Richtung) eine erhebliche Hublänge ausübt. Bei den bekannten Anordnungen verblieb der Führungsschlitten immer hinter der Wand, da diese ortsfest angeordnet war und die Pinole die Führungsschiene trug. Hieraus resultiert aber ein weiterer Beitrag zur Verringerung einer Schwingungsneigung, da die freikragende Spindelstocklänge deutlich verringert ist bei gleichzeitig sehr großen Hub in Z-Richtung der Spindel.

Eine Weiterbildung der Erfindung zeichnet sich dadurch aus, daß an der Wand ein in den Bearbeitungsraum hineinstehender Balkon vorgesehen ist, der die Führungsschiene trägt. Auch diese Maßnahme trägt zur Stabilisierung insgesamt bei. Insbesondere unterstützt er die meist schlanken ausgeführten Führungsschienen. Die Neigung zu Schwingungen wird durch diese Maßnahme noch weiter reduziert. Dabei entsteht die Möglichkeit, daß bei sehr großen Hublängen die Führungsschienen zuverlässig und stabil unterstützt werden. Vorzugsweise wird aufgrund der Stabilitätserfordernisse versucht werden, die Führungsschienen einstückig auszubilden.

Alternativ zu der vorgenannten Lösung ist in einer anderen Variante der Erfindung vorgesehen, daß ein die Führungsschiene tragender Wagen oder ein Lager vorgesehen ist, an dem ein in den Bearbeitungsraum hineinstehender Balkon vorgesehen ist. Die Spindelanordnung ist zum Beispiel auf einem Lager ortsfest ausgebildet und erlaubt dem Werkzeug nur eine Bewegung in Spindelachsrichtung, also in die Z-Richtung. In einem solchen Fall ist die Spindel auf einem Lager angeordnet. In einer anderen Variante befindet sich die Führungsschiene auf einem Wagen, der zum Beispiel auch als Querwagen bekannt ist. Durch die Anordnung des Balkons entweder am Lager oder insbesondere am Wagen führt der Balkon exakt die gleiche Bewegung aus wie die übrige Führungsschiene.

In diesem Zusammenhang ist es von Vorteil, wenn die Wand zum Beispiel von dem Wagen oder dem Lager gehalten ist. Die Wand ist dabei zum Beispiel teleskopartig ausgebildet, insbesondere dann, wenn für die Lagerung der Spindel ein Wagen vorgesehen ist.

Die zuvor beschriebenen Varianten der Erfindung waren sowohl für Ausführungen mit einer (gegebenenfalls breiten und stabilen) Führungsschiene, als auch mit mehreren Führungsschienen gedacht. Eine Weiterbildung der Erfindung sieht demnach vor, daß zwei oder mehrere Führungsschienen an der Werkzeugmaschine feststehend und voneinander beabstandet, insbesondere unterhalb des Spindelstockes vorgesehen sind. Durch diese Maßnahme wird eine weitere Stabilisierung des gesamten Spindelstockes bzw. der rotierenden Spindel erreicht. Durch die Auflage auf zwei Führungsschienen wird eine bessere Auflage gewährleistet, wie es beispielsweise bei einer Ausführung mit nur einer Führungsschiene gegeben ist. Auch lässt sich die gesamte Bauausführung des Spindelstockes für eine solche zweiseitige Führung insgesamt günstiger gestalten.

Gemäß der Erfindung ist vorgesehen, daß mit dem Spindelstock nicht nur eine Spindel bewegt wird, sondern durchaus auch mehrere Spindeln in einem Spindelstock gemäß der Erfindung lagerbar beziehungsweise positionierbar sind.

Die Erfindung zeichnet sich auch dadurch aus, daß der Spindelstock mehrere Führungsschlitten besitzt und der dem Werkzeug am nächsten gelegene Führungsschlitten bezüglich des Werkzeuges zurückgesetzt ist. Durch diese Maßnahme wird erreicht, daß der Spindelstock sehr weit in den Bearbeitungsraum hineinfahren kann, ohne die notwendige Stabilität dabei zu verlieren und trotzdem ohne das sonst notwendige weite Auskragen auskommt.

Von Vorteil ist es auch, wenn der Balkon die Breite des Spindelstockes besitzt. Auch dies führt wie alle zuvor beschriebenen Maßnahmen zu einer weiteren Stabilisierung des gesamten translatorischen Gebildes. Die Schwingungen werden weiter reduziert und ein Aufschwingen verhindert. Durch die Ausgestaltung der Werkzeugmaschine mit einem solchen Balkon wird neben der möglichen Hubverlängerung auch erreicht, daß gegebenenfalls die freikragende Länge des Spindelstockes nicht vergrössert, sondern eher verringert werden kann. Die Länge des Balkons ist dabei so bemessen, daß diese ungefähr der Länge des sowieso in den Arbeitsraum hineinstehenden Spindelkopfes, einschließlich des Werkzeuges entspricht und so z.B. bei Wartungsarbeiten oder Werkstückwechselarbeiten nicht stört.

Ein weiterer Aspekt der erfindungsgemäßen Werkzeugmaschine ist dadurch angegeben, daß wenigstens eine mit dem Spindelstock mitfahrende Schutzvorrichtung vorgesehen ist. Diese ist zum Beispiel derart ausgebildet und angeordnet, daß eine Verschmutzung der in den Bearbeitungsraum vorkragenden Führungsschiene vermieden wird. Dabei kommt es insbesondere darauf an, daß beim Vorfahren des Führungsschlittens die Führungsschienen sauber sind. Insofern ist es günstig, wenn neben dem Schutz der Führungsschienen gleichzeitig Maßnahmen getroffen werden, die die Führungsschiene bzw. -schienen beim Vorfahren in den Bearbeitungsraum geleichzeitig reinigen. Beides stellt die Erfindung zur Verfügung.

Dazu wird beispielsweise entsprechend einer vorteilhaften Weiterbildung der erfindungsgemäßen Werkzeugmaschine vorgeschlagen, daß die Schutzvorrichtung als Abdeckung, beispielsweise als U-förmiges, den Spindelstock umschließendes, unten offenes Blech ausgebildet und an dem Spindelstock befestigt ist. Durch diese Maßnahme wird bereits erreicht, daß durch die Bearbeitung freiwerdende Späne und gegebenenfalls auch Kühl- bzw. Spülmittel nicht auf die Führungsschiene und den Spindelstock gelangen können.

Eine Ausgestaltung der zuvor beschriebenen weiterbildung zeichnet sich dadurch aus, daß an der Abdeckung oder an der Wand des Bearbeitungsraumes eine zumindest teilweise der Kontur der Öffnung folgende Abstreiflippe vorgesehen ist. Die Kombination von Abdeckblech mit einer Abstreiflippe ist sehr günstig, da dadurch ohne erheblichen maschinentechnischen Aufwand in einfacher Weise sowohl der Schutz als auch die Reinigung der beweglichen Maschinenteile gewährleistet wird. So wird beispielsweise beim Zurückfahren des Spindelstockes aus dem Bearbeitungsraum dort gegebenenfalls anhaftendes Kühl- bzw. Spülmittel und Späne gleich abgestreift. Somit wirken die Abdeckung und die Abstreiflippe gemeinsam und sorgen für eine stets saubere Oberfläche des Spindelstockes und der Führungsschienen, wodurch selbstverständlich auch die Beweglichlichkeit des Führungsschlittens nicht beeinträchtigt wird.

Eine Weiterbildung der Erfindung sieht in Umkehrung des zuvor beschriebenen Prinzips vor, daß an der Wand bzw. in der Öffnung für die Durchführung des Spindelstockes in dem Bearbeitungsraum ein Tunnel als Schutzvorrichtung vorgesehen ist, und die Abstreiflippe an dem Spindelstock befestigt ist und mit diesem mitfährt. Damit wird ebenfalls erreicht, daß der Spindelstock ständig sauber bleibt. Es ist lediglich zu gewährleisten, daß die Abstreiflippe an dem vorderen Ende, das heißt an dem zu dem Bearbeitungsraum weisenden Ende angeordnet ist, um zu verhindern, daß Späne bzw. Kühl- und Spülflüssigkeit an den hinteren Teil des Spindelstockes gelangen.

Eine Weiterbildung der erfindungsgemäßen Werkzeugmaschine sieht vor, daß als Schutzvorrichtung eine glatte Verkleidung des Spindelstockes vorgesehen ist, die von einem seitlich an dem Spindelstock heruntergezogenen Blech gebildet ist, welches auch die Führungschiene überdeckt. Dies ist eine sehr elegante Lösung zum Schutz beider Maschinenteile.

Die Erfindung zeichnet sich auch dadurch aus, daß eine mit dem Spindelstock mitfahrende Abstreifleiste vorgesehen ist, die der Kontur der Führungsschiene bzw. der Öffnung für den Spindelstock in der Wand des Bearbeitungsraumes entspricht.

Von Vorteil ist es dabei, wenn die Abstreifleiste mehrteilig ausgebildet ist. Dies lässt sich technisch einfach lösen und gewährleistet einen Komplettschutz von Spindelstock und Führungsschienen.

Alternativ ist vorgesehen, daß die Abstreifleiste aus einem speziellen Profilblech mit Abstreifer gebildet ist. Die Abstreifleiste ist hierbei einteilig ausgebildet, wobei das Profilblech der gewünschten Kontur im Bereich der Führungsschiene und/oder unterhalb des Spindelstockes angepaßt ist und dieses Profilblech an seinen Endseiten mit einer entsprechenden Dichtlippe, zum Beispiel aus Gummi verbunden ist, um so die Abstreifer zu bilden. Die Erfindung umfaßt sowohl eine ein- wie auch eine mehrteilige Ausgestaltung dieser Abstreifleiste.

Die Abstreifleiste kann dabei selbstverständlich auch Lippen aufweisen. Von Vorteil ist es auch, wenn wie gemäß einer Weiterbildung der Erfindung vorgesehen, der weitere Teil der Abstreifleiste unter dem Spindelstock angeordnet ist. Dies ist ebenfalls eine wirksame konstruktive Maßnahme, die die Anpassung der Abstreifleiste im unteren Teil des Spindelstockes erleichtert, da regelmäßig in diesem Teil die Konturen etwas komplizierter sind als im oberen Teil, wo glatte Konturen zu verzeichnen sind.

Es wurde auch gefunden, daß es von Vorteil ist, wenn an dem in Richtung des Bearbeitungsraumes weisenden Ende des Spindelstockes Bürsten als Schutz vor Verunreinigungen angeordnet sind. Diese Bürsten schützen insbesondere den Bereich, in dem die Führungsschienen mit dem Führungsschlitten zusammenwirken. Gleichzeitig sind die Bürsten dafür vorgesehen, daß sie beim Vor- und Zurückfahren die Führungsschienen reinigen.

Zur Erhöhung der möglichen Bewegungsachsen, die durch die Werkzeugspindel durchgeführt werden sollen, ist es erfindungsgemäß vorgesehen, daß ein Wagen die Führungsschienen für den Führungsschlitten des Spindelstockes trägt und zumindest quer zur Spindellängsachse verfahrbar ist. Durch diese Maßnahme lässt sich eine weitere verfahrbarkeit der Spindel, z.B. zusätzlich zur Z-Richtung in die X- und Y-Richtung einer Werkzeugmaschine erreichen.

Die Erfindung stellt auch einen Spindelstock für eine Werkzeugmaschine zur Verfügung, der sich dadurch auszeichnet, daß er einen Führungsschlitten trägt, der auf Führungsschienen in den Bearbeitungsraum einer Werkzeugmaschine, insbesondere einer Werkzeugmaschine wie zuvor beschrieben, bewegbar ist. Dieser Spindelstock ist dafür vorgesehen, bestimmte Werkzeugmaschinen, die noch nicht mit einem derartigen Spindelstock ausgerüstet sind, nachzurüsten. Insofern sind alle Vorteile, wie sie zuvor für die Werkzeugmaschine beschrieben wurden, in gleicher Weise auf den Spindelstock zutreffend, wenn er dann in einer Werkzeugmaschine eingebaut wurde.

Insbesondere ist es von Vorteil, wenn der erfindungsgemäße Spindelstock derart ausgebildet ist, daß der Spindelstock mehrere Führungsschlitten besitzt und der dem Werkzeug am nähesten gelegene Führungsschlitten bezüglich dem Werkzeug zurückgesetzt ist. Hieraus erreicht man eine gewisse Auskraglänge. Der Spindelstock ist dabei in der Lage derart auf der Führungsschiene verfahren zu werden, daß der Führungsschlitten durch die Wand, die den Bearbeitungsraum begrenzt, hindurchfahrbar ist.

Die Erfindung stellt auch ein Verfahren zum Reinigen von Führungsschienen, insbesondere von Führungsschienen eines Spindelstockes in einer Werkzeugmaschine, wie zuvor beschrieben, zur Verfügung. Das erfindungsgemäße Verfahren zeichnet sich durch die Abfolgung folgender Verfahrensschritte aus:
- Der Spindelstock wird in den Bearbeitungsraum einer Werkzeugmaschine hineingefahren,
- eine am Spindelstock angeordnete Abstreifleiste fährt bis an das im Bearbeitungsraum hineinragende Ende der Führungsschiene vor und streift dabei gleichzeitig dabei aufgelaufenen Schmutz ab und
- anschließend wird die Spindel zurück gefahren.

Das Verfahren, wie zuvor beschrieben, gewährleistet im normalen Bearbeitungsprozeß bei den normalen Spindelbewegungen die Reinigung der Führungsschienen. In gleicher Weise ist es aber auch möglich, eine Reinigung gesondert, das heißt speziell zu Reinigungszwecken durchzuführen, in dem die zuvor angegebenen verfahrensschritte nacheinander durchgeführt werden.

Eine Weiterbildung des zuvor beschriebenen Verfahrens zeichnet sich dadurch aus, daß an dem Spindelstock angeordnete Bürsten die Führungsschienen zumindest beim Zurückfahren des Spindelstockes schützen bzw. abkehren.

In diesem Zusammenhang wird insbesondere darauf hingewiesen, daß alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte bauliche, also vorrichtungsgemäße Merkmale können auch im Rahmen der Vorrichtungsansprüche berücksichtigt und beansprucht werden und zählen ebenfalls zur Erfindung und zur Offenbarung.

Die Erfindung wird nachfolgend anhand von Ausführungsbeispielen weiter beschrieben.

Es zeigen:
- Fig. 1:: eine Ansicht eines Teiles der Bearbeitungsmaschine vom Bearbeitungsraum aus,
- Fig. 2:: eine Seitenansicht des Spindelkopfes,
- Fig. 3:: eine weitere Seitenansicht des Spindelkopfes in einer anderen Bearbeitungsstellung.

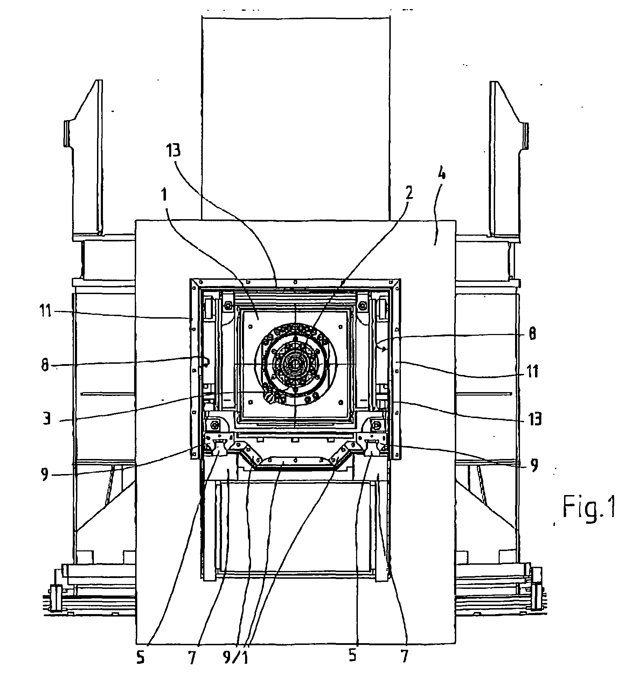

Die Fig. 1 zeigt einen Teil einer Werkzeugmaschine vom Bearbeitungsraum I aus gesehen. Mit dem Bezugszeichen 1 ist dabei der Spindelstock bezeichnet. Die Werkzeugspindel selbst trägt das Bezugszeichen 2. Der Spindelkopf 3 ragt am weitesten in den Bearbeitungsraum I hinein und trägt das Bearbeitungswerkzeug. Der Bearbeitungsraum I wird von einer Wand 4 begrenzt, die eine Öffnung 11 aufweist, durch die der Spindelstock 1 vor- und zurückfahren kann.

Gemäß der Erfindung ist der Spindelstock 1 in der Lage einen großen Hub in Z-Richtung, also in Spindellängsrichtung auszuüben. Um die Führungsschiene 5 möglichst gut vor herumfliegenden Spänen zu schützen, ist eine Schutzvorrichtung vorgesehen.

Diese besteht in dem hier dargestellten Beispiel aus einer Abdeckung 8, die mit dem Spindelstock mitfährt und daher an dem Spindelstock befestigt ist.

Die Abdeckung 8 ist zum Beispiel aus einem U-winklig gebogenen Blech gearbeitet, wobei dieses U-Blech von oben auf den Spindelstock 1 aufgeschoben ist, derart, daß das U unten offen ist. Die Seiten der Abdeckung 8 sind dabei so weit heruntergezogen, daß diese die Führungsschienen 5 nach unten überragen.

Neben einem separaten, U-förmigen Blech, welches auf dem Spindelstock 1 als Abdeckung 8 aufgesetzt wird, ist es natürlich auch möglich, das Gehäuse des Spindelstockes 1 entsprechend auszugestalten.

Die Schutzvorrichtung beziehungsweise die Abdeckung 8 wirkt dabei zusammen mit einer Abstreiflippe 13, die an einem L-artigen Blech an der Wand 4 befestigt ist und der Kontur der Öffnung 11 folgt. Die Abstreiflippe 13 verdeckt dabei einen möglichen Spalt zwischen der Abdeckung 8 und der Wand 4. Gleichzeitig wird Schmutz, der sich auf der Abdeckung 8 befindet, durch die Vor- und Zurückbewegung des Spindelstockes 1 abgestreift.

Unterhalb des Spindelstockes 1 ist eine Abstreifleiste 9 vorgesehen. Diese ist zum Beispiel aus einem oder mehreren Teilen 9/1 aufgebaut. Diese Abstreifleiste besitzt ihrerseits entsprechende Mittel zum Abdichten eines möglichen Spaltes. Die Abstreifleiste 9 fährt mit dem Spindelstock 1 mit. Die Abstreifleiste 9 umgreift dabei sowohl die Kontur der Führungsschiene 5 wie auch den übrigen unteren Bereich unterhalb des Spindelstockes 1 beziehungsweise den von der Abdeckung 8 offengelassenen Bereich.

Das Bezugszeichen 7 bezeichnet den Balkon, auf welchen die Führungsschienen 5 gelagert sind.

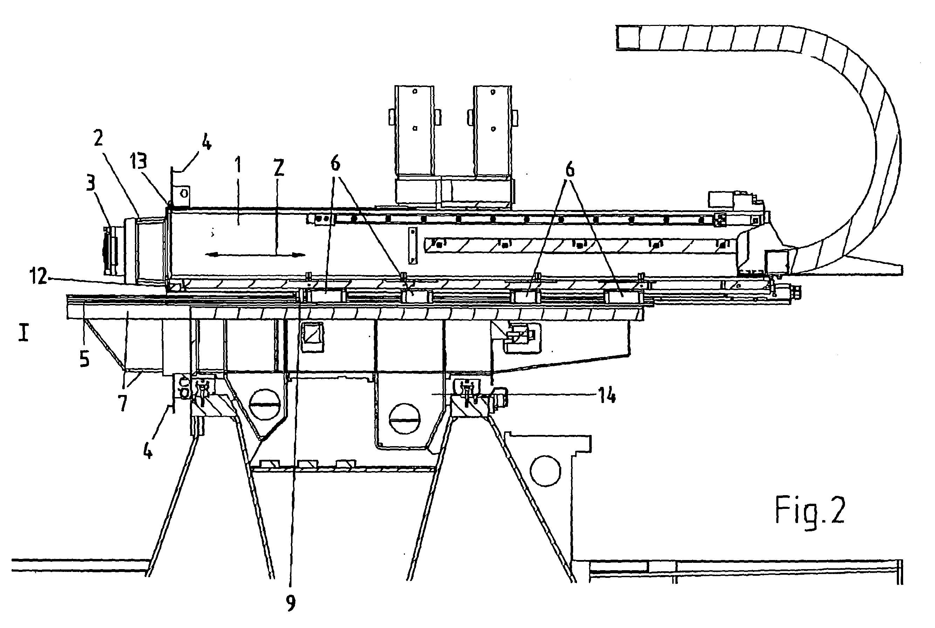

Die Fig. 2 zeigt eine Seitenansicht eines Teiles der erfindungsgemäßen Werkzeugmaschine. Dies betrifft insbesondere den Spindelstock 1, der erfindungsgemäß die Führungsschlitten 6 trägt. Die Führungsschlitten 6 bewegen sich auf den Führungsschienen 5. Die Führungsschienen 5 wiederum sind abgestützt von einem Balkon 7. Dieser Balkon 7 ragt insbesondere in dem Bearbeitungsraum I der Werkzeugmaschine hinein, wodurch der Spindelstock 1 wesentlich weiter nach vorne in den Bearbeitungsraum I hineingefahren werden kann, ohne die negativen Folgen einer zu weiten Auskragung, nämlich Schwingungsverhalten und damit verbundenes Aufschwingen, befürchten zu müssen. Der Spindelstock 1 ist entlang der durch den Doppelpfeil gekennzeichneten Richtung der Spindellängsachse Z verfahrbar. Der Balkon 7, respektive die Führungsschienen 5, sind in den gezeigten Ausführungsbeispielen auf einem Wagen 14 angeordnet, der quer zur z-Richtung verfahrbar ist.

Das Bezugszeichen 12 bezeichnet Bürsten, die am vorderen Ende des Spindelstockes 1 angeordnet sind und die insbesondere die Führungsschienen 5 schützen und gleichzeitig reinigen. Das Bezugszeichen 9 bezeichnet eine mitfahrende Abstreifleiste, welche ebenfalls zum Schutz der Führungsschienen 5 angeordnet ist. Mit dem Bezugszeichen 4 wird die Wand des Bearbeitungsraumes I schematisch angedeutet. Mittels einer Abstreiflippe 13 wird die Wand 4 beispielsweise am oberen Rand des Spindelstockes zum Bearbeitungsraum I hin abgedichtet.

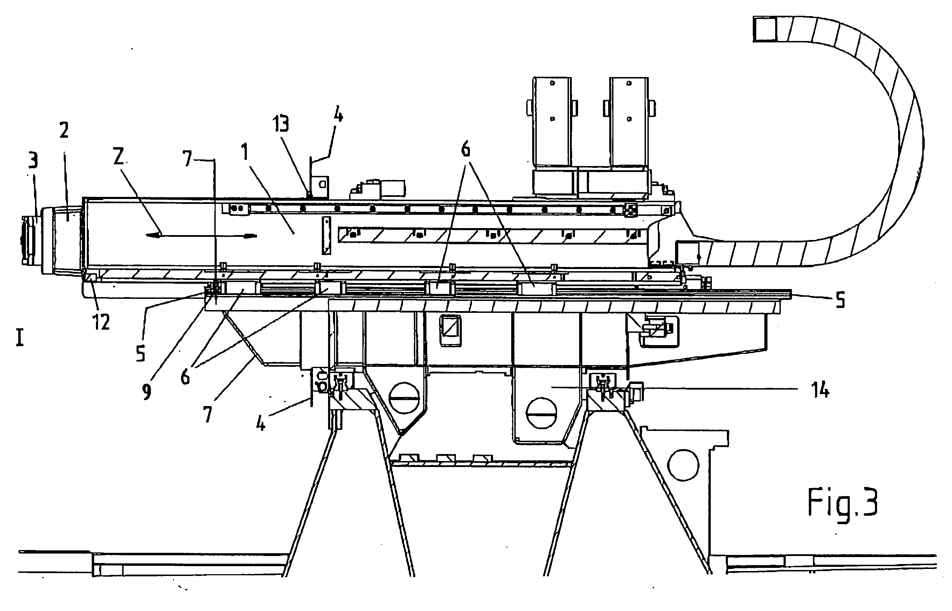

Die Fig. 3 zeigt die Seitenansicht der Fig. 2 jedoch in einer weiter vorgezogenen Spindelstellung des Spindelstockes 1. Deutlich ersichtlich ist, daß der Spindelstock 1 wesentlich weiter in den Bearbeitungsraum I hineinragt, als beispielsweise in der Darstellung der Fig. 2. Anhand der Darstellung der Fig. 3 werden die erfindungsgemäßen Vorteile jedoch auch besonders deutlich, indem ersichtlich ist, wie weit die Spindel bzw. der Spindelstock 1 in den Bearbeitungsraum I hineingefahren werden kann, ohne ein Aufschwingen befürchten zu müssen. Dies wird gemäß der vorgestellten Ausführungsform der Erfindung auch durch den Balkon 7 erreicht, der die Führungsschienen 5 trägt, die in etwa soweit in den Bearbeitungsraum I hineinragen, wie der Spindelkopf 3 inklusive des Werkzeuges in dem Bearbeitungsraum, in der am weitesten zurückgezogenen Stellung steht. Damit ist das erfindungsgemäße Anliegen, nämlich eine höhere Stabilität der Spindel zu erreichen und ein Aufschwingen und Rattern des Werkzeuges auf dem Werkstück zu vermeiden, in sehr eindrucksvoller und günstiger weise gelöst. Alle anderen Bezugszeichen und Merkmale wurden bereits in vorhergehenden Figuren beschrieben, so daß auf eine erneute Vorstellung verzichtet wird.

Die jetzt mit der Anmeldung und später eingereichten Ansprüche sind versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Werkzeugmaschine mit wenigstens einem Spindelstock (1) für eine oder mehrere Werkzeugspindeln (2) mit einem Spindelkopf (3), wobei der Spindelstock in Spindelachsrichtung (Z) verfahrbar ist, wobei der Bearbeitungsraum (I) der Werkzeugmaschine durch eine Wand (4) begrenzt ist, der Spindelstock durch eine Öffnung in den Bearbeitungsraum hineinreicht und die Werkzeugspindel an ihrem vorderen Ende ein in den Bearbeitungsraum hineinragendes Werkzeug trägt, **dadurch gekennzeichnet, dass** mindestens ein auf mindestens einer Führungsschiene (5) bewegbarer Führungsschlitten (6) für den Spindelstock (1) vorgesehen ist und der Spindelstock (1) den Führungsschlitten (6) trägt.

2. werkzeugmaschine nach Anspruch 1, **dadurch gekennzeichnet, dass** die Führungsschiene (5) in den Bearbeitungsraum (I) hineinragt und/oder zumindest ein Führungsschlitten (6) durch die Öffnung (11) der Wand (4) fährt.

3. Werkzeugmaschine nach einem oder mehreren der vorhergehenden Ansprüche, **dadurch gekennzeichnet, dass** an der Wand (4) ein in den Bearbeitungsraum (I) hineinstehender Balkon (7) vorgesehen ist, der die Führungsschiene (5) trägt.

4. Werkzeugmaschine nach einem oder mehreren der vorhergehenden Ansprüche, **dadurch gekennzeichnet, dass** mindestens zwei Führungsschienen (5) an der Werkzeugmaschine feststehend und voneinander beabstandet, insbesondere unterhalb des Spindelstockes (1) vorgesehen ist.

5. Werkzeugmaschine nach einem oder mehreren der vorhergehenden Ansprüche, **dadurch gekennzeichnet, dass** ein die Führungsschiene (5) tragender Wagen (14) oder Lager vorgesehen ist, an dem ein in den Bearbeitungsraum hineinstehender Balkon (7) vorgesehen ist und/oder die wand (4) von dem Wagen (14) oder dem Lager gehalten ist.

6. Werkzeugmaschine nach einem oder mehreren der vorhergehenden Ansprüche, **dadurch gekennzeichnet, dass** der Spindelstock (1) mehrere Führungsschlitten (6) besitzt und der dem Werkzeug am nächsten gelegene Führungsschlitten (6) bezüglich dem Werkzeug zurückgesetzt ist.

7. Werkzeugmaschine nach einem oder mehreren der vorhergehenden Ansprüche, **dadurch gekennzeichnet, dass** der Balkon (7) die Breite des Spindelstockes (1) besitzt und/oder die Länge des Balkons (7) so bemessen ist, dass diese ungefähr der Länge des in den Bearbeitungsraum (I) hineinragenden Spindelkopfes (3) einschließlich des Werkzeuges entspricht.

8. Werkzeugmaschine nach einem oder mehreren der vorhergehenden Ansprüche, **dadurch gekennzeichnet, dass** wenigstens eine mit dem Spindelstock (1) mitfahrende Schutzvorrichtung vorgesehen ist und/oder die Schutzvorrichtung als Abdeckung, beispielsweise als U-förmiges, den Spindelstock (1) umschließendes, unten offenes Blech (8) ausgebildet und an dem Spindelstock (1) befestigt ist und/oder an der Abdeckung oder an der Wand (4) des Bearbeitungsraumes (I) eine zumindest teilweise der Kontur der Öffnung folgende Abstreiflippe (13) vorgesehen ist.

9. Werkzeugmaschine nach einem oder mehreren der vorhergehenden Ansprüche, **dadurch gekennzeichnet, dass** an der Wand (4) bzw. in der Öffnung ein Tunnel als Schutzvorrichtung vorgesehen ist und die Abstreiflippe (13) an dem Spindelstock (1) befestigt ist und mit diesem mitfährt und/oder als Schutzvorrichtung eine glatte Verkleidung des Spindelstockes vorgesehen ist, gebildet von einem seitlich am Spindelstock (1) heruntergezogenen Blech (8), welches auch die Führungsschiene (5) überdeckt.

10. Werkzeugmaschine nach einem oder mehreren der vorhergehenden Ansprüche, **dadurch gekennzeichnet, dass** eine mit dem Spindelstock (1) mitfahrende Abstreifleiste (9) vorgesehen ist, die der Kontur der Führungsschiene (5) bzw. der Öffnung (11) für den Spindelstock in der Wand (4) des Bearbeitungsraumes (I) entspricht und/oder die Abstreifleiste (9) mehrteilig ausgebildet oder aus einem speziellen Profilblech mit Abstreifer gebildet ist und/oder die Abstreifleiste (9) Lippen aufweist und/oder ein weiterer Teil (9/1) der Abstreifleiste (9) unter dem Spindelstock (1) angeordnet ist.

11. Werkzeugmaschine nach einem oder mehreren der vorhergehenden Ansprüche, **dadurch gekennzeichnet, dass** an dem in Richtung des Bearbeitungsraumes (I) weisenden Ende des Spindelstockes (1) Bürsten (12) als Schutz vor verunreinigungen angeordnet sind und/oder ein Wagen (14) vorgesehen ist, der die Führungsschienen (5) für den Führungsschlitten (6) des Spindelstockes (1) trägt und zumindest quer zur Spindellängsachse verfahrbar ist.

12. Spindelstock für eine Werkzeugmaschine für die Aufnahme von einer oder mehreren je ein Werkzeug tragende Werkzeugspindel/n, **dadurch gekennzeichnet, dass der** Spindelstock (1) mindestens einen Führungsschlitten (6) trägt, der auf Führungsschienen (5) in den Bearbeitungsraum (I) einer Werkzeugmschine, insbesondere einer Werkzeugmaschine nach einem oder mehreren der vorhergehenden Ansprüche bewegbar ist.

13. Spindelstock nach dem vorhergehenden Anspruch 12, **dadurch gekennzeichnet, dass** der Spindelstock (1) mehrere Führungsschlitten (6) besitzt und der dem Werkzeug am nächsten gelegene Führungsschlitten (6) bezüglich dem Werkzeug zurückgesetzt ist.

14. Verfahren zum Reinigen von Führungsschienen, insbesondere von Führungsschienen eines Spindelstockes in einer Werkzeugmaschine nach einem oder mehreren der Ansprüche 1 bis 12, **dadurch gekennzeichnet, dass** der Spindelstock in den Bearbeitungsraum der Werkzeugmaschine hineingefahren wird, dabei eine am Spindelstock angeordnete Abstreifleiste bis an das im Bearbeitungsraum hineinragende Ende der Führungsschienen fährt und dabei gleichzeitig darauf aufgelaufenen Schmutz abstreift und anschließend die Spindel zurückgefahren wird.

15. Verfahren nach Anspruch 14, **dadurch gekennzeichnet, dass** an dem Spindelstock angeordnete Bürsten die Führungsschienen zumindest beim Zurückfahren des Spindelstockes schützen bzw. abkehren.
